Europäisches Patentamt

European Patent Office

Office européen des brevets

(19)

(11) **EP 0 640 670 B1**

(12)

# EUROPEAN PATENT SPECIFICATION

(45) Date of publication and mention
of the grant of the patent:
**23.12.1998 Bulletin 1998/52**

(51) Int Cl.6: **C09D 183/04**, C08K 5/54
// (C08K5/54, C08L83:06),
(C08K5/54, C08L83:08)

(21) Application number: **94113136.9**

(22) Date of filing: **23.08.1994**

(54) **Film-forming silicone emulsion composition**

Filmbildende Siliconemulsionszusammensetzung

Emulsion filmogène d'une composition de silicone

(84) Designated Contracting States:
**DE FR GB IT NL**

(30) Priority: **23.08.1993 JP 207381/93**
**24.11.1993 JP 293113/93**

(43) Date of publication of application:
**01.03.1995 Bulletin 1995/09**

(73) Proprietor: **TOSHIBA SILICONE CO., LTD.**
**Tokyo 106 (JP)**

(72) Inventors:
- **Shimotsu, Hiroyoshi, c/o Toshiba**
  **Minato-ku, Tokyo (JP)**
- **Takahashi, Toshihiro, c/o Toshiba**
  **Minato-ku, Tokyo (JP)**
- **Yusa, Sachiko, c/o Toshiba**
  **Minato-ku, Tokyo (JP)**

(74) Representative:
**Hansen, Bernd, Dr. Dipl.-Chem. et al**
**Hoffmann Eitle,**
**Patent- und Rechtsanwälte,**
**Arabellastrasse 4**
**81925 München (DE)**

(56) References cited:
**US-A- 3 980 599**          **US-A- 4 725 635**

## Description

The present invention relates to a film-forming silicone emulsion composition which forms a film exhibiting an excellent adhesion to a rubber, a plastic, a cloth, etc., and having a good gloss, a good water repellency, good release properties, and good slip properties.

Heretofore, a silicone emulsion has been used as a releasing agent, a polishing agent or a fiber treating agent for domestic articles, bags, cloth, vinyl products for ship or automobile, sports goods, etc. However, the conventional silicone emulsion is disadvantageous in that it has an insufficient durability, so that it must be reapplied. As silicone emulsions having a sufficient durability there have been known emulsions of aminofunctional silicone (see JP-A-60-127382 (The term "JP-A" as used herein means an "unexamined published Japanese patent application"), JP-A-62-116633, JP-A-63-66265). However, the application of these emulsions is all limited to cloth material having a good adhesiveness and permeability or material requiring little adhesiveness. Accordingly, silicone emulsions having a good durability and a good adhesion to materials such as rubber and plastic as well have been desired.

It has been known to use a mixture of aminosiloxane and epoxysiloxane (see JP-B-48-17514 (The term "JP-B" as used herein means an "examined Japanese patent publication")) or a reaction product of aminosiloxane with epoxysilane (JP-B-1-22390) as a fiber treating agent. However, further improvements in the adhesion and durability of such a fiber treating agent have been desired.

Further, it has been known to use a reaction product or mixture of epoxysiloxane and aminosilane as a surface treating agent for rubber, plastic, etc. (see JP-A-52-123394, JP-A-54-43891, JP-A-54-90375, JP-A-56-78960, JP-A-61-159427, JP-A-2-233763). However, the compositions disclosed in these references are normally in the form of solution in an organic solvent and are not embodied in the form of emulsion. If a composition made of such a solution in an organic solvent is used, it causes environmental hygiene or safety problems such as ignition as well as denaturation of a substrate such as a rubber and a plastic. Moreover, it is difficult to obtain an emulsion composition having good properties by merely replacing such a composition by an emulsion.

Accordingly, an object of the present invention is to provide a film-forming silicone emulsion composition which forms a film exhibiting a good adhesion to various materials, and having a good water repellency, good release properties and good slip properties.

As a result of extensive studies to accomplish the above-described object, it has been found that by adding to an emulsion of an organopolysiloxane containing amino group or epoxy group, a silane containing epoxy group or amino group, and optionally an emulsion of an organopolysiloxane containing hydroxyl group or hydrolyzable group, an emulsion composition which exhibits an excellent adhesion to materials such as fiber, rubber, plastic and the like, and forms on the surface thereof a film having a good non-tackiness, a good release property, a good lustering property, a good water repellency, a good abrasion resistance and good slip properties can be obtained. Thus, the present invention has been completed based on this finding.

The film-forming silicone emulsion composition of the present invention comprises the following components which are mixed and dispersed:

(A) a silicone emulsion comprising:

(a) 100 parts by weight of an organopolysiloxane represented by the following general formula:

$$R^1{}_a R^2{}_b R^3{}_c SiO_{\frac{4-(a+b+c)}{2}}$$

wherein R1's each represents the same or difference $C_{1-20}$ monovalent hydrocarbon group or hydrogen atom; R2's each represents a hydroxyl group or a hydrolyzable group; R3's each represents an amino-containing group or an epoxy-containing group; and a, b and c satisfy the relationships of $0 < a < 3$, $0 \leq b < 2$, and $0 < c \leq 1$, respectively, containing at least one amino group or epoxy group per molecule;
(b) 5-100 parts by weight of an emulsifying agent; and
(c) 50-500 parts by weight of water;

(B) 5-300 parts by weight of a hydrolyzable silane containing at least one functional group per molecule wherein said functional group is an amino-containing group if $R^3$ in the component (A) is an epoxy-containing group, or an epoxy-containing group if $R^3$ is an amino-containing group; and
(C) a silicone emulsion comprising:

(d) 5-200 parts by weight of an amino- and epoxy-free organopolysiloxane represented by the following general

formula:

$$R^4{}_d R^5{}_e SiO\,\frac{4-(d+e)}{2}$$

wherein $R^4$'s each represents the same or different $C_{1\text{-}20}$ monovalent hydrocarbon group hydrogen atom; $R^5$'s each represents a hydroxyl group or a hydrolyzable group; and d and e satisfy the relationships of $0 < d < 3$, $0 < e < 2$, and $1.9 < d + e < 2.2$, containing at least one hydroxyl group or hydrolyzable group per molecule;
(e) 5-100 parts by weight of an emulsifying agent based on 100 parts by weight of (d); and
(f) 50-300 parts by weight of water based on 100 parts by weight of (d).

The present invention is described in detail below.

The organopolysiloxane as the component (a) in the component (A) is one containing at least one amino group or epoxy group per molecule and forms a silicone emulsion together with the emulsifying agent as the component (b) and water as the component (c).

In the general formula which represents the component (a), $R^1$'s each represents the same or different $C_{1\text{-}20}$ monovalent hydrocarbon group or hydrogen atom. Specific examples of the $C_{1\text{-}20}$ monovalent hydrocarbon group include an alkyl group such as methyl group, ethyl group, propyl group or butyl group; an alkenyl group such as vinyl group or propenyl group; an aryl group such as phenyl group; and an aralkyl group such as β-phenylethyl group. Preferred among these $R^1$'s are hydrogen atom, methyl group, vinyl group, and phenyl group, which can provide the composition having excellent properties. Particularly preferred among these hydrocarbon groups is methyl group.

$R^2$'s each represents a hydroxyl group or a hydrolyzable group. Examples of the hydrolyzable group include an alkoxy group such as methoxy group, ethoxy group, propoxy group or butoxy group, an acyloxy group, an amino group, an aminoxy group, an oxime group, a ketoxime group, an amide group, and an alkenyloxy group. Preferred among these are a hydroxyl group, and an alkoxy group, particularly hydroxyl group and methoxy group, because of their handleability.

$R^3$'s each represents an amino-containing group or an epoxy-containing group. Examples of the amino-containing group include aminomethyl group, β-aminoethyl group, γ-aminopropyl group, δ-aminobutyl group, γ-(methylamino)propyl (methylamino)propyl group, γ-(ethylamino)propyl group, γ-group, and salts obtained by entirely or partially converting amino groups of these amino-containing groups to quaternary ammonium. From the standpoint of stability during storage, an amino-containing group having amino group connected to silicon atom via at least three carbon atoms, such as γ-aminopropyl group, is preferred. An example of the epoxy-containing group is a hydrocarbon group substituted by glycidoxy group or epoxycyclohexyl group. The hydrocarbon group to be substituted preferably has 1 to 10 carbon atoms, particularly 2 to 4 carbon atoms. $R^3$ is preferably an amino-containing group if it is desired to provide a composition with a good adhesion to a substrate. Alternatively, $R^3$ is preferably an epoxy-containing group if it is desired to provide a composition with good coating properties to a substrate, particularly rubber or plastic, and good release properties. $R^3$'s are preferably all one of amino-containing group and epoxy-containing group, rather than a mixture of amino-containing group and epoxy-containing group.

In the above-described general formula, a, b and c each represents a number which satisfies the relationships of $0 < a < 3$, $0 \leq b < 2$, and $0 < c \leq 1$, preferably $1.0 < a\,2$, $0 \leq b < 0.5$, $0.1 \leq c \leq 0.5$, and $1.9 < a + b + c < 2.2$. If the hydroxyl group or hydrolyzable group represented by $R^2$ is present in excess, i.e., b is 2 or more, the cured film obtained is disadvantageously hard and brittle.

The organopolysiloxane used as the component (a) is preferably one having a molecular weight of 500 to 500,000, more preferably 1,000 to 100,000.

The organopolysiloxane as the component (a) can be easily synthesized in one stage by polymerizing a cyclic polysiloxane monomer such as octamethylcyclotetrasiloxane and water in the presence of an emulsifying agent, and an aminofunctional silane or epoxyfunctional silane using an acid or base catalyst.

The organopolysiloxane can also be obtained by polymerizing a cyclic polysiloxane monomer in the presence of water and a polymerization catalyst, adding an aminofunctional silane or epoxyfunctional silane to the reaction system, and then further conducting the polymerization reaction. Further, the organopolysiloxane can be obtained by equilibrating a polysiloxane oil with an aminofunctional silane or epoxyfunctional silane in the presence of a catalyst.

The emulsifying agent used as the component (b) in the present invention serves to emulsify the organopolysiloxane as the component (a) and hence prepare a stable homogeneous silicone emulsion.

Examples of the emulsifying agent include nonionic surface active agents, anionic surface active agents, and cationic surface active agents. If the organopolysiloxane as the component (a) is an amino-containing group, a nonionic surface active agent or cationic surface active agent is preferably used as the emulsifying agent. In particular, a nonionic surface active agent is preferably used regardless of $R^3$.

Examples of the nonionic surface active agent include polyoxyalkylene alkyl ether, polyoxyalkylene alkyl phenol, polyoxyalkylene alkyl ester, polyoxyalkylene sorbitan ester, polyethylene glycol, polypropylene glycol and ethylene oxide adducts of diethylene glycol trimethyl nonanol.

Examples of the anionic surface active agent include an alkylbenzenesulfonic acid such as hexylbenzenesulfonic acid, octylbenzenesulfonic acid, decylbenzenesulfonic acid, dodecylbenzenesulfonic acid, cetylbenzeneacid or myristylbenzenesulfonic acid; a sulfuric acid ester of polyoxyethylene monoalkyl ether such as $CH_3(CH_2)_6CH_2O$ $(C_2H_4O)_2SO_3H$, $CH_3(CH_2)_8CH_2O(C_2H_4O)_8SO_3H$, $CH_3(CH_2)_{19}CH_2O(C_2H_4O)_2SO_3H$ or $CH_3(CH_2)_8CH_2C_6H_4O$ $(C_2H_4O)_2SO_3H$; and alkylnaphthylsulfonic acid.

Examples of the cationic surface active agent include quaternary ammonium hydroxides such as octyltrimethylammonium hydroxide, dodecyltrimethylammonium hydroxide, hexadecyltrimethylammonium hydroxide, octyldimethylbenzylammonium hydroxide, decyldimethylbenzylammonium hydroxide, dioctadecyldimethylammonium hydroxide, beef tallow trimethylammonium hydroxide or palm oil trimethylammonium hydroxide, and salts thereof.

The emulsifying agent (b) is used in an amount of 5 to 100 parts by weight, preferably 10 to 50 parts by weight, per 100 parts by weight of the organopolysiloxane as the component (a), thereby obtaining a good emulsified state.

Water used as the component (c) in the present invention serves as a dispersant where the organopolysiloxane (a) is dispersed with the emulsifying agent (b). Water as the component (c) is not specifically limited so far as it is water. The amount of water used is 50 to 500 parts by weight, preferably 100 to 300 parts by weight, per 100 parts by weight of the organopolysiloxane as the component (a), thereby obtaining a good emulsified state.

The silicone emulsion as the component (A) of the present invention can be obtained by emulsifying the organopolysiloxane (a) in water (c) with the emulsifying agent (b).

If the component (a) is synthesized in the form of emulsion as in emulsion polymerization, an emulsifying agent or water may be optionally added to the component (a) to prepare the composition (A). In particular, an emulsion obtained by emulsion polymerization of a cyclic siloxane monomer comprises grains having a small diameter and exhibits a good stability. Thus, the resulting composition exhibits excellent properties. Therefore, such an emulsion is preferably used in the present invention. Emulsification can be conducted with an emulsion dispersion apparatus such as colloid mill, homomixer, homogenizer, combimix or sand grinder.

The component (B) of the present invention is a hydrolyzable silane containing at least one functional group per molecule, and imparts a good adhesion to the composition of the present invention. The functional group is an amino-containing group or an epoxy-containing group. If $R^3$ in the organopolysiloxane as the component (a) is an amino-containing group, the functional group is an epoxy-containing epoxy-containing group. On the contrary, if $R^3$ is an amino-containing group, the functional group is an group. Examples of the amino-containing group and epoxy-containing group as the functional group in the component (B) include those described with reference to $R^3$. Similarly, preferred examples of the functional group include those described with reference to $R^3$. The component (B) is also a hydrolyzable silane containing hydrolyzable group. Examples of the hydrolyzable group include the same hydrolyzable group as represented by $R^2$ in the component (a). It may partially contain hydroxyl group. Preferred among these hydrolyzable groups is an alkoxy group, particularly methoxy group and ethoxy group.

Specific examples of the hydrolyzable silane as the component (B) include an epoxy-containing alkoxysilane such as γ-glycidoxypropyltrimethoxysilane, γ-glycidoxypropylmethyldimethoxysilane, γ-glycidoxypropyltriethoxysilane, β-(3,4-epoxycyclohexyl)ethyltrimethoxysilane, β-(3,4-epoxycyclohexyl)ethylmethyldimethoxysilane, β-(3,4-epoxycyclohexyl)ethyltriethoxysilane or β-(3,4-epoxycyclohexyl)ethylmethyldiethoxysilane; an amino-containing alkoxysilane such as γ-aminopropyltriethoxysilane, γ-aminopropylmethyldiethoxysilane, N-(β-aminoethyl)aminomethyltrimethoxysilane, γ-[N-(β-aminoethyl)amino]propyltrimethoxysilane, γ-[N-(β-aminoethyl)amino]propylmethyldimethoxysilane, N-(β-aminoethyl)aminomethyltributoxysilane or γ-[N-{β-(N-(β-aminoethyl)amino)ethyl}amino]propyltrimethoxysilane; and the like.

Preferred among these hydrolyzable silanes is one containing as a hydrolyzable group a dialkoxy group or a trialkoxy group, particularly trimethoxy group, which can provide a film having a good adhesion and a good durability.

The component (B) is used in an amount of 5 to 300 parts by weight, preferably 10 to 200 parts by weight, per 100 parts by weight of the organopolysiloxane as the component (a). If the amount of the component (B) is less than 5 parts by weight, sufficient adhesion cannot be obtained. If the amount of the component (B) exceeds 300 parts by weight, the resulting film is hard and brittle and thus exhibits insufficient durability.

The component (B) is blended with the silicone emulsion as the component (A) as it is, but may be blended with the silicone emulsion in the form of mixture with a proper emulsifying agent to improve its dispersibility and stability in the emulsion. Examples of the emulsifying agent include those described with reference to the component (b).

By mixing and dispersing the component (A) and the component (B), a silicone emulsion composition which exhibits an excellent adhesion to rubber, plastic, cloth and the like, and forms a film having a good gloss, a good water repellency and good release properties can be obtained. When it is used as a surface treating agent for weatherstrip in automobile, etc., the silicone emulsion composition is required to exhibit better slip properties.

As a result of further investigations, it was found that addition of an emulsion of an organopolysiloxane containing hydroxyl group or hydrolyzable group as the component (C) is effective to obtain good slip properties.

The organopolysiloxane as the component (d) in the component (C) is an amino- and epoxy-free organopolysiloxane containing at least one hydroxyl group or hydrolyzable group per molecule. It forms a silicone emulsion with the emulsifying agent as the component (e) and water as the component (f).

In the general formula representing the component (d), $R^4$'s each represents the same or different $C_{1-20}$ monovalent hydrocarbon group or hydrogen atom. Specific examples of the monovalent hydrocarbon group include those described with reference to $R^1$. Preferred among these are hydrogen atom, methyl group, vinyl group and phenyl group, particularly methyl group, thereby providing a composition with good properties.

$R^5$'s each represents hydroxyl group or a hydrolyzable group. Examples of the hydrolyzable group include those described with reference to $R^2$. Preferred among these groups are hydroxyl group and an alkoxy group, particularly hydroxyl group and methoxy group, because of their handleability.

In the above-described general formula, d and e each represents a number which satisfies the relationships of $0 < d < 3$, $0 < e < 2$, and $1.9 < d + e < 2.2$, preferably $1.0 < d < 2.0$, $0 < e < 0.5$, and $1.9 < d + e < 2.1$. If e is 0, the curability of the resulting film is insufficient. On the contrary, if e is 2 or more, the resulting cured film is hard and brittle and thus does not exhibit good slip properties. In order to obtain good slip properties or good abrasion resistance, d and e need to satisfy the relationship of $1.9 < d + e < 2.2$.

The organopolysiloxane as the component (d) is preferably one having a molecular weight of 500 to 500,000, more preferably 1,000 to 100,000.

The component (d) is used in an amount of 5 to 200 parts by weight, particularly 20 to 100 parts by weight, per 100 parts by weight of the organopolysiloxane as the component (a). This is because the amount of the component (d) is preferably 5 parts by weight or more to obtain good slip properties and abrasion resistance while it is preferably 200 parts by weight to prevent decrease of the adhesion to a substrate.

Examples of the emulsifying agent used as the component (e) in the present invention include those described with reference to the component (b). Preferred among these emulsifying agents are nonionic surface active agents and cationic surface active agents.

The emulsifying agent (e) is used in an amount of 5 to 100 parts by weight, preferably 10 to 50 parts by weight, per 100 parts by weight of the organopolysiloxane as the component (d), similarly to the component (b).

Water used as the component (f) in the present invention is used in an amount of 50 to 300 parts by weight, preferably 100 to 300 parts by weight, per 100 parts by weight of the organopolysiloxane as the component (d), similarly to the component (c).

The silicone emulsion as the component (C) of the present invention can be obtained in the same manner as the component (A). A silicone emulsion obtained by emulsion polymerization can be preferably used as well.

The emulsion composition of the present invention can be obtained by mixing the component (A) and the silicone emulsion (C), which is blended therein, with the hydrolyzable silane as the component (B), and dispersing those. It has heretofore been known to use a reaction product of epoxy silane and amino silane as a surface treating agent. In the present invention, the component (A) and the component (B) are not allowed to undergo reaction but are mixed and dispersed. For example, the use of a reaction product of epoxy group and amino group cannot attain the effects of the present invention.

The composition of the present invention may be further diluted with water for easy coating before use in the treatment of various substrates. In general, the composition of the present invention is preferably diluted such that the silicone content is 5 to 60% by weight, particularly 10 to 50% by weight.

The composition of the present invention may further comprise a powder of an inorganic substance such as fumed silica, precipitated silica, ground quartz or diatomaceous earth, or a spherical or amorphous powder of an organic substance such as acryl resin, styrene resin, ethylene resin, nylon resin, benzoguanamine resin, melanine resin, polytetrafluoroethylene resin or silicone resin (e.g., polymethylsilsesquioxane) for the purpose of reinforcement, matte effect, enhancement of slip properties, etc.

In particular, for the purpose of enhancement of slip properties, a powder having an average particle diameter of 0.01 to 100 μm, particularly 0.05 to 20 μm is preferably used. Preferred among the above-described resins are fine powders of nylon resin, polytetrafluoroethylene resin and silicone resin. Spherical shape is preferred as the particle shape. In particular, a spherical silicone resin fine powder is preferred. The amount of the powder blended is preferably 0.1 to 200 parts by weight, particularly 5 to 50 parts by weight, per 100 parts by weight of the organopolysiloxane as the component (a). The powder may be blended with the silicone emulsion as the component (A) as it is. It may be blended with the silicone emulsion in the form of mixture with a proper emulsifying agent to improve its dispersibility and stability in the emulsion. Examples of the emulsifying agent include those described with reference to the component (b).

In order to further enhance the slip properties of the composition, an emulsion of an unsubstituted polydimethylsiloxane may be added to the composition. In particular, an emulsion of a siloxane having a viscosity as high as 1,000 to 100,000 cps is preferred. Further, various additives such as dye and pigment for coloring, or ultraviolet absorbent or ultraviolet screener for preventing deterioration by ultraviolet rays may be blended with the composition so far as the properties of the composition of the present invention are not impaired.

The emulsion composition of the present invention may further comprise a curing catalyst which is used in the condensation cure reaction of silicone. Examples of the curing catalyst include aliphatic acid metal salts, amines, and ammoniums. These compounds may be used in combination. Examples of the metal salts of aliphatic acids include those having organic group directly connected to metal atom, such as dibutyltin diacetate, dibutyltin dioctate, dibutyltin dilaurate, dibutyltin dioleate, dibutyltin distearate, tributyltin acetate, tributyltin octoate, tributyltin laurate, dioctyltin diacetate, dioctyltin dilaurate, diethyltin dioleate or monomethyltin dioleate, and those having no organic group directly connected to metal atom, such as zinc octenate, iron octenate or tin octenate. Examples of the amines include organic amines such as monomethylamine, dimethylamine, monoethylamine, diethylamine, ethylenediamine or hexamethyltetraamine, and salts thereof. Examples of the ammoniums include tetramethylammonium, dimethylbenzylammonium, and salts thereof. The emulsion composition of the present invention has a good curability even if it is free of curing catalyst. The emulsion composition of the present invention also forms a cured film having a good adhesion to various substrates and a good durability. However, the adhesion to a substrate and the durability may vary depending on the kind of the substrate, the kind of a filler contained in the substrate and the surface conditions of the substrate. Further, the desired adhesion and durability depend on the purpose of the substrate thus treated. The emulsion composition of the present invention preferably further comprises a curing catalyst if good adhesion and durability are particularly desired. The amount of the curing catalyst added is preferably 0.1 to 10 parts by weight, particularly 0.5 to 5 parts by weight, per 100 parts by weight of the organopolysiloxane as the component (a). On the other hand, if the emulsion composition is required to have a long pot life, it is preferably free of the above-described curing catalyst.

The curing catalyst is blended with the silicone emulsion as the component (A) as it is, but may be added to the silicone emulsion in the form of mixture with a proper emulsifying agent. Examples of the emulsifying agent include those described with reference to the component (b).

The emulsion composition of the present invention may further comprise an emulsifying agent to improve its applicability to a substrate in addition to the emulsifying agent as the component (b), the emulsifying agent as the component (e), and the emulsifying agent which is optionally mixed with the component (B). Such the emulsifying agent may be blended similarly with the other components during the preparation of the emulsion composition of the present invention. Examples of the emulsifying agent include those described with reference to the component (b). Preferred among these emulsifying agents are nonionic surface active agents. The emulsion composition of the present invention exhibits a good coatability even if it is free of emulsifying agent. Nevertheless, if the substrate to be treated exhibits a high water repellency, the emulsion composition of the present invention preferably comprises an additional emulsifying agent as described above to maintain a good coatability against the variation of the concentration and coated amount of the composition and change of the coating apparatus.

The amount of the additional emulsifying agent to be blended is preferably 5 to 50 parts by weight, particularly 10 to 30 parts by weight, per 100 parts by weight of the organopolysiloxane as the component (a).

The treatment of the substrate with the composition of the present invention is conducted such that the composition is coated on various substrates such as a paper, a rubber, a cloth, a plastic, a metal or a ceramic by a method such as dip coat, spray coat, brush coat, knife coat or roll coat, water is dry removed, and the coating is allowed to stand at room temperature for from 10 nimutes to several hours or slightly heated according to the type of the substrate, to cure the coating.

As compared with the conventional silicone emulsion composition, the silicone emulsion composition of the present invention provides a cured film having a good adhesion to various substrates to be treated and a good durability. In particular, the silicone emulsion composition of the present invention can provide a cured film having a good adhesion to rubber, plastic and other substrates to which the conventional silicone emulsion cannot provide a sufficient adhesion. The silicone emulsion composition of the present invention is characterized in that it can be fairly applied to various substrates and provide a cured film having a good appearance, good release properties, a good water repellency, good slip properties and a good abrasion resistance.

The silicone emulsion composition of the present invention can be used for the purpose of protecting or lustering the surface of automobile parts, furniture and building materials or providing these materials with water repellency or slip properties. Further, the silicone emulsion composition of the present invention can be used for the purpose of surface treatment of fiber, paper, film or metal foil or lustering shoes or bags. In particular, the silicone emulsion composition of the present invention is most preferred to impart slip properties to rubbers such as automobile weatherstrip.

A weatherstrip treated by the composition of the present invention exhibits good slip properties and thus causes no abnormal noise when doors are opened or closed or upon low speed running. Further, such a weatherstrip does not adhere to glass or coated plate or does not adhere each other. Moreover, such a weatherstrip does not adhere to other materials due to freezing at low temperatures.

The present invention will be further described in the following examples, but the present invention should not be construed as being limited thereto. The term "parts" and "%" as used hereinafter indicate "parts by weight" and "% by weight", respectively. The viscosity is determined at a temperature of 25°C.

SYNTHESIS EXAMPLE 1

600 Parts of water, 50 parts of octadecyldimethylammonium chloride and 4 parts of KOH were charged into a reaction vessel. These components were then thoroughly mixed. The mixture was then mixed with 400 parts of octamethylcyclotetrasiloxane. The mixture was then passed through a colloid mill having mills positioned at an interval of 10 mil to prepare an emulsion. The emulsion was then heated to a temperature of 90°C for 4 hours to conduct polymerization. With the polymerization product was then mixed a solution of 4 parts of octadecyldimethylammonium chloride in 30 parts of γ-[N-(β-aminoethyl)amino]propyltrimethoxysilane, and polymerization reaction was continued at a temperature of 50°C for 2 hours. Acetic acid was then added to the reaction mixture to neutralize the catalyst. Thus, a silicone emulsion A was obtained. The silicone content in the emulsion was about 40%.

SYNTHESIS EXAMPLE 2

800 Parts of water, 70 parts of dihexadecylmethylammonium chloride and 500 parts of octamethylcyclotetrasiloxane were charged into a reaction vessel. These components were then thoroughly mixed. With the mixture was then mixed 3 parts of KOH. The mixture was then emulsified in the same manner as in Synthesis Example 1. The emulsion was then heated to a temperature of 95°C for 4 hours to conduct polymerization. With the polymerization product was then mixed a solution of 7 parts of dihexadecylmethylammonium chloride in 30 parts of γ-[N-(β-aminoethyl) amino]propyltrimethoxysilane and 30 parts of γ-[N-(β-aminoethyl)amino]propylmethyldimethoxysilane. The polymerization reaction was continued at a temperature of 50°C for 2 hours. Acetic acid was then added to the reaction mixture to neutralize the catalyst. Thus, a silicone emulsion B was obtained. The silicone content in the emulsion was about 40%.

SYNTHESIS EXAMPLE 3

1,000 Parts of octamethylcyclotetrasiloxane, 20 parts of hexamethyldisiloxane and 6 parts of potassium silanolate were charged into a reaction vessel. These components were thoroughly mixed. The mixture was then heated to a temperature of 165°C with stirring for 2 hours to conduct polymerization and equilibration. To the polymerization product were then added 150 parts of γ-[N-(β-aminoethyl)amino]propyltrimethoxysilane. The reaction mixture was then heated to a temperature of 165°C with stirring for 6 hours to conduct polymerization and equilibration. The mixture was then cooled. With the mixture were then mixed 40 parts of water with stirring so that the remaining methoxy group was thoroughly hydrolyzed. To the reaction system were then added 0.5 parts of KOH. The reaction mixture was then subjected to equilibration at a temperature of 160°C until distillation of methanol was completed. Acetic acid was then added to the reaction mixture to neutralize the catalyst. The reaction mixture was then subjected to stripping at 5 mmHg and 200°C for 30 minutes to obtain an amino-containing polysiloxane. The polysiloxane thus obtained showed a viscosity of 150 cps.

100 Parts of the polysiloxane, 30 parts of dihexadecylmethylammonium chloride, and 120 parts of water were mixed. The mixture was then emulsified in the same manner as in Synthesis Example 1 to obtain a silicone emulsion D. The silicone content in the emulsion was 40%.

SYNTHESIS EXAMPLE 4

600 Parts of water, 50 parts of octadecyldimethylammonium chloride and 4 parts of KOH were charged into a reaction vessel. These components were then thoroughly mixed. The mixture was then mixed with 400 parts of octamethylcyclotetrasiloxane. The mixture was then passed through a colloid mill having mills positioned at an interval of 10 mil to prepare an emulsion. The emulsion was then heated to a temperature of 90°C for 4 hours to conduct polymerization. With the polymerization product was then mixed a solution of 4 parts of octadecyldimethylammonium chloride in 30 parts of γ-glycidoxypropyltrimethoxysilane, and the polymerization reaction was continued at a temperature of 50°C for 2 hours. Acetic acid was then added to the reaction mixture to neutralize the catalyst. Thus, a silicone emulsion E was obtained. The silicone content in the emulsion was about 40%.

SYNTHESIS EXAMPLE 5

800 Parts of water, 70 parts of dihexadecylmethylammonium chloride and 500 parts of octamethylcyclotetrasiloxane were charged into a reaction vessel. These components were then thoroughly mixed. With the mixture was then mixed 3 parts of KOH. The mixture was then emulsified in the same manner as in Synthesis Example 1. The emulsion was then heated to a temperature of 95°C for 4 hours to conduct polymerization. With the polymerization product was then mixed a solution of 7 parts of dihexadecylmethylammonium chloride in 30 parts of γ-glycidoxypropyltrimethoxysilane and 30 parts of γ-glycidoxypropylmethyldimethoxysilane, and the polymerization reaction was continued at a temperature of 50°C for 2 hours. Acetic acid was then added to the reaction mixture to neutralize the catalyst. Thus, a silicone emulsion F was obtained. The silicone content in the emulsion was 40%.

SYNTHESIS EXAMPLE 6

600 Parts of water, 50 parts of octadecyldimethylammonium chloride and 4 parts of KOH were charged into a reaction vessel. These components were then thoroughly mixed. With the mixture was then mixed 400 parts of octamethylcyclotetrasiloxane and 10 parts of methyltrimethoxysilane. The mixture was then emulsified in the same manner as in Synthesis Example 1. The emulsion was then heated to a temperature of 90°C for 4 hours to conduct polymerization. Acetic acid was then added to the reaction mixture to neutralize the catalyst to obtain a silicone emulsion J. The silicone content in the emulsion was 40%. The average molecular weight of the silicone was 15,000.

SYNTHESIS EXAMPLE 7

700 Parts of water and 50 parts of dodecylbenzenesulfonic acid were charged into a reaction vessel. These components were then thoroughly mixed. With the mixture was then mixed 400 parts of octamethylcyclotetrasiloxane. The mixture was then emulsified in the same manner as in Synthesis Example 1. The emulsion was then heated to a temperature of 90°C for 4 hours to conduct polymerization. Triethanolamine was then added to the reaction mixture to neutralize the catalyst to obtain a silicone emulsion K. The silicone content in the emulsion was 30%. The average molecular weight of the silicone was 20,000.

SYNTHESIS EXAMPLE 8

100 Parts of polydimethylsiloxane having an average molecular weight of 50,000 terminated by dimethylhydrosilyl groups at both ends, 30 parts of polyoxyethylene(9)nonylphenylether and 120 parts of water were mixed. The mixture was then emulsified in the same manner as in Synthesis Example 1 to obtain a silicone emulsion L. The silicone content in the emulsion was 40%.

REFERENCE EXAMPLE 1

100 Parts of the silicone emulsion A were mixed with 30 parts of γ-glycidoxypropyltrimethoxysilane and 100 parts of water with stirring to prepare an emulsion composition of the present invention. The composition was then dip-coated onto a nylon cloth as a specimen, and then heated to a temperature of 110°C for 5 minutes to cure the same. The coating specimen was allowed to stand at room temperature for 1 day. The properties of the coating cloth were then evaluated as described below. The results obtained are shown in Table 1.
Appearance: Comparison of gloss of the specimen was made between before and after coating. The criteria of evaluation were as follows:

1 Good gloss
2 Slight gloss
3 No gloss

Adhesion: The coating specimen was vigorously rubbed. The adhesion of the specimen was then evaluated from the surface condition thereof as follows:

1 No falling-off, good adhesion
2 Slight falling-off or fog
3 Falling-off

Water repellency: Waterdrops were dropped on the specimen and then allowed to stand for 3 minutes. Water repellency was then evaluated from the condition of waterdrops as follows.

1 Drewdrops are formed, showing a good water repellency
2 Drewdrops are slightly spread, but showing a good water repellency
3 Drewdrops are spread, showing a poor water repellency

Release properties: A commercially available adhesive tape having a width of 12 mm (available from Nichiban Co., Ltd.) was applied to the specimen. The specimen was then allowed to stand under a load of 1 kg/cm$^2$ for 1 day. A force required to peel off the tape in the direction of 180° was autographically measured. The release properties were then evaluated in accordance with the following criteria:

1 The peel force is 10 g/12 mm or less, showing good release properties
2 The peel force is from 10 to 50 g/12 mm
3 The peel force is as much as more than 50 g/12 mm

Table 1

|  | Example 1 |
|---|---|
| Appearance | 1 |
| Adhesion | 1 |
| Water repellency | 1 |
| Release properties | 1 |

REFERENCE EXAMPLE 2

The emulsion composition prepared in Reference Example 1 was brush-coated on an EPDM foamed rubber sheet, and then heated to a temperature of 150°C for 2 minutes to cure the same. The coating specimen was then allowed to stand at room temperature for 1 day. The properties of the coating rubber were evaluated in the same manner as in Reference Example 1. The stress developed when the coating rubber was horizontally moved 10 cm over a glass plate under a load of 50 g was autographically measured. The dynamic coefficient of friction was determined from the average stress value.

EXAMPLE 1

100 Parts of the silicone emulsion A, 50 parts of the silicone emulsion J, 30 parts of γ-glycidoxypropyltrimethoxysilane and 100 parts of water were mixed with stirring to prepare an emulsion composition. The emulsion composition thus obtained was then evaluated in the same manner as in Reference Examples 1 and 2. The results obtained are shown in Table 2.

EXAMPLES 2 TO 5

An emulsion composition having the formulations shown in Table 2 was prepared in the same manner as in Example 1. The emulsion composition thus obtained was then evaluated in the same manner as in Reference Example 2. The results obtained are shown in Table 2.

Table 2

|  |  |  |  | Example | | | | |
|---|---|---|---|---|---|---|---|---|
|  |  |  |  | 1 | 2 | 3 | 4 | 5 |
| Silicone emulsion | Component (A) | Amino-containing | A | 100 |  |  |  |  |
|  |  |  | B |  | 100 |  |  |  |
|  |  |  | C |  |  |  |  |  |
|  |  |  | D |  |  | 100 |  |  |
|  |  | Epoxy-containing | E |  |  |  | 100 |  |
|  |  |  | F |  |  |  |  | 100 |
|  |  |  | G |  |  |  |  |  |
|  |  |  | H |  |  |  |  |  |
|  |  |  | I |  |  |  |  |  |
|  | Component (C) |  | J | 50 |  |  | 80 |  |
|  |  |  | K |  | 50 |  |  |  |

# EP 0 640 670 B1

Table 2   (continued)

| | | | | Example | | | | |
|---|---|---|---|---|---|---|---|---|
| | | | | 1 | 2 | 3 | 4 | 5 |
| Silane | γ-Glycidoxypropyltrimethoxysilane | | L | 30 | 50 | 50 | | 30 |
| | β-(3,4-Epoxycyclohexyl)-ethyltrimethoxysilane | | | | | 30 | | |
| | γ-Aminopropyltriethoxysilane | | | | | | 30 | 30 |
| Water | | | | 100 | 300 | 100 | 100 | 100 |
| Properties | Appearance | | | 1 | 1 | 2 | 1 | 1 |
| | Adhesion | | | 1 | 1 | 1 | 1 | 1 |
| | Water repellency | | | 1 | 1 | 1 | 1 | 1 |
| | Release properties | | | 1 | 1 | 1 | 1 | 1 |
| | Dynamic coefficient of friction | | | 1.21 | 1.25 | 1.15 | 1.08 | 1.19 |

## COMPARATIVE EXAMPLE 1

To 100 parts of the silicone emulsion A were added 30 parts of γ-glycidoxypropyltrimethoxysilane, 1.0 part of dibutyltin dilaurate, and 100 parts of water with stirring to prepare an emulsion composition. The emulsion composition thus obtained was then evaluated in the same manner as in Reference Example 2. The coatability of the emulsion composition was evaluated in the following manner:
Coatability: The appearance of the specimen was visually evaluated as follows:

1 Uniform coating appearance
2 Slight coat repellency, partial uneven coating
3 Coat repellency, entire uneven coating

The results obtained are shown in Table 3.

## COMPARATIVE EXAMPLES 2 AND 3 AND EXAMPLE 6

An emulsion composition having the formulations shown in Table 3 was prepared in the same manner as in Comparative Example 1. The emulsion composition thus obtained was then evaluated in the same manner as in Comparative Example 1. The results obtained are shown in Table 3.
Specimens having the same formulations as used in Comparative Examples 1 to 3 and Example 6 were prepared in the same manner as in Reference Example 2 except that the composition was spray-coated on the substrate instead of brush-coating in the evaluation of the coatability. All the specimens showed a uniform coating appearance.

Table 3

| | | | | Comparative Example | | | Example |
|---|---|---|---|---|---|---|---|
| | | | | 1 | 2 | 3 | 6 |
| Silicone emulsion | Component (A) | Amino-containing | A | 100 | 100 | 100 | 100 |
| | | | B | | | | |
| | | | C | | | | |
| | | | D | | | | |
| | | Epoxy-containing | E | | | | |
| | | | F | | | | |

10

Table 3   (continued)

| | | | | Comparative Example | | | Example |
|---|---|---|---|---|---|---|---|
| | | | | 1 | 2 | 3 | 6 |
| | | | G | | | | |
| | | | H | | | | |
| | | | I | | | | |
| | Component (C) | | J | | | | 50 |
| | | | K | | | | |
| | | | L | | | | |
| Silane | γ-Glycidoxypropyltrimethoxysilane | | | 30 | 30 | 30 | 30 |
| | β-(3,4-Epoxycyclohexyl)-ethyltrimethoxysilane | | | | | | |
| | γ-Aminopropyltriethoxysilane | | | | | | |
| Additive | Dibutyltin dilaurate | | | 1.0 | | | 1.0 |
| | Silicone rein powder[*1] | | | | 20 | | 20 |
| | Polyoxyethylene(13) nonylphenylether | | | | | 30 | 30 |
| Water | | | | 100 | 100 | 100 | 100 |
| Properties | Appearance | | | 1 | 3 | 1 | 3 |
| | Adhesion | | | 1 | 1 | 1 | 1 |
| | Water repellency | | | 1 | 1 | 1 | 1 |
| | Release properties | | | 1 | 1 | 1 | 1 |
| | Dynamic coefficient of friction | | | 1.50 | 0.95 | 1.46 | 0.75 |
| Coatability | | | | 2 | 2 | 1 | 1 |

*1: True spherical polymethylsilsesquioxane particles having an average particle diameter of 2.0 μm.

# Claims

1. A film-forming silicone emulsion composition comprising the following components which are mixed and dispersed:

   (A) a silicone emulsion comprising:

      (a) 100 parts by weight of an organopolysiloxane represented by the following general formula:

$$R^1{}_a R^2{}_b R^3{}_c SiO_{\frac{4-(a+b+c)}{2}}$$

      wherein $R^1$'s each represents the same or different $C_{1-20}$ monovalent hydrocarbon group or hydrogen atom; $R^2$'s each represents a hydroxyl group or a hydrolyzable group; $R^3$'s each represents an amino-containing group or an epoxy-containing group; and a, b and c satisfy the relationships of $0 < a < 3$, $0 \le b < 2$, and $0 < c \le 1$, respectively, containing at least one amino group or epoxy group per molecule;
      (b) 5-100 parts by weight of an emulsifying agent; and
      (c) 50-500 parts by weight of water;

(B) 5-300 parts by weight of a hydrolyzable silane containing at least one functional group per molecule wherein said functional group is an amino-containing group if $R^3$ in the component (A) is an epoxy-containing group, or an epoxy-containing group if $R^3$ is an amino-containing group; and

(C) a silicone emulsion comprising:

(d) 5-200 parts by weight of an amino- and epoxy-free organopolysiloxane represented by the following general formula:

$$R^4{}_d R^5{}_e SiO \frac{4-(d+e)}{2}$$

wherein $R^4$'s each represents the same or different $C_{1-20}$ monovalent hydrocarbon group hydrogen atom; $R^5$'s each represents a hydroxyl group or a hydrolyzable group; and d and e satisfy the relationships of $0 < d < 3$, $0 < e < 2$, and $1.9 < d + e < 2.2$, containing at least one hydroxyl group or hydrolyzable group per molecule;

(e) 5-100 parts by weight of an emulsifying agent based on 100 parts by weight of (d); and

(f) 50-300 parts by weight of water based on 100 parts by weight of (d).

2. A film-forming silicone emulsion composition according to Claim 1, wherein the organopolysiloxane of component (a) has a molecular weight of from 500 to 500,000.

3. A film-forming silicone emulsion composition according to Claim 1, wherein the emulsifying agent of component (b) is a nonionic surface active agent, an anionic surface active agent or a cationic surface active agent.

4. A film-forming silicone emulsion composition according to Claim 1, wherein the hydrolyzable silane of component (B) is an epoxy-containing alkoxysilane or an amino-containing alkoxysilane.

5. A film-forming silicone emulsion composition according to Claim 1, wherein the organopolysiloxane of component (d) has a molecular weight of from 500 to 500,000.

6. A film-forming silicone emulsion composition according to Claim 1, wherein the emulsifying agent of component (e) is a nonionic surface active agent, an anionic surface active agent or a cationic surface active agent.

**Patentansprüche**

1. Filmbildende Zusammensetzung einer Siliconemulsion, umfassend die folgenden Bestandteile, die gemischt und dispergiert werden:

(A) Eine Siliconemulsion, umfassend:

(a) 100 Gewichtsteile eines durch die folgende allgemeine Formel dargestellten Organopolysiloxans:

$$R^1{}_a R^2{}_b R^3{}_c SiO \frac{4-(a+b+c)}{2}$$

worin die $R^1$-Gruppen jeweils gleiche oder verschiedene einwertige $C_{1-20}$-Kohlenwasserstoffgruppen oder ein Wasserstoffatom darstellen; die $R^2$-Gruppen jeweils eine Hydroxylgruppe oder eine hydrolysierbare Gruppe darstellen; die $R^3$-Gruppen jeweils eine aminohaltige Gruppe oder eine epoxyhaltige Gruppe darstellen; und a, b und c die Beziehungen $0 < a < 3$, $0 \leq b < 2$ bzw. $0 < c \leq 1$ erfüllen, das mindestens eine Aminogruppe oder Epoxygruppe pro Molekül enthält;

(b) 5 - 100 Gewichtsteile eines Emulgators; und

(c) 50 - 500 Gewichtsteile Wasser;

(B) 5 - 300 Gewichtsteile eines hydrolysierbaren Silans, das mindestens eine funktionelle Gruppe pro Molekül enthält, worin die genannte funktionelle Gruppe eine aminohaltige Gruppe ist, wenn $R^3$ in Bestandteil (A) eine epoxyhaltige Gruppe ist, oder eine epoxyhaltige Gruppe, wenn $R^3$ eine aminohaltige Gruppe ist; und

(C) eine Siliconemulsion, umfassend:

(d) 5 - 200 Gewichtsteile eines von Amino- und Epoxygruppen freien Organopolysiloxans, das durch die folgende allgemeine Formel dargestellt wird:

$$R^4{}_d R^5{}_e SiO \tfrac{4-(d+e)}{2}$$

worin die $R^4$-Gruppen jeweils gleiche oder verschiedene einwertige Kohlenwasserstoffgruppen oder ein Wasserstoffatom darstellen; die $R^5$-Gruppen jeweils eine Hydroxylgruppe oder eine hydrolysierbare Gruppe darstellen; und d und e die Beziehungen $0 < d < 3$, $0 < e < 2$ und $1,9 < d + e < 2,2$ erfüllen, das mindestens eine Hydroxylgruppe oder hydrolysierbare Gruppe pro Molekül enthält;
(e) 5 - 100 Gewichtsteile, bezogen auf 100 Gewichtsteile von (d) eines Emulgators; und
(f) 50 - 300 Gewichtsteile, bezogen auf 100 Gewichtsteile von (d), Wasser.

2. Filmbildende Zusammensetzung einer Siliconemulsion gemäß Anspruch 1, worin das Organopolysiloxan des Bestandteiles (a) ein Molekulargewicht von 500 bis 500.000 aufweist.

3. Filmbildende Zusammensetzung einer Siliconemulsion gemäß Anspruch 1, worin der Emulgator des Bestandteils (b) ein nichtionisches oberflächenaktives Mittel, ein anionisches oberflächenaktives Mittel oder ein kationisches oberflächenaktives Mittel ist.

4. Filmbildende Zusammensetzung einer Siliconemulsion gemäß Anspruch 1, worin das hydrolysierbare Silan des Bestandteils (B) ein epoxyhaltiges Alkoxysilan oder ein aminohaltiges Alkoxysilan ist.

5. Filmbildende Zusammensetzung einer Siliconemulsion gemäß Anspruch 1, worin das Organopolysiloxan des Bestandteils (d) ein Molekulargewicht von 500 bis 500.000 aufweist.

6. Filmbildende Zusammensetzung einer Siliconemulsion gemäß Anspruch 1, worin der Emulgator des Bestandteils (e) ein nichtionisches oberflächenaktives Mittel, ein anionisches oberflächenaktives Mittel oder ein kationisches oberflächenaktives Mittel ist.

**Revendications**

1. Composition d'émulsion de silicone filmogène comprend les composants suivants qui sont mélangés et dispersés :

(B) une composition en émulsion de silicone comprenant :

(a) 100 parties en poids d'un organopolysiloxane représenté par la formule générale suivante :

$$R^1{}_a R^2{}_b R^3{}_c SiO \tfrac{4-(a+b+c)}{2}$$

dans laquelle les $R^1$ représentent chacun un groupe hydrocarbure monovalent en $C_{1-20}$ identique ou différent ou un atome d'hydrogène ; les $R^2$ représentent chacun un groupe hydroxyle ou un groupe hydrolysable; les $R^3$ représentent chacun un groupe contenant un amino ou un groupe contenant un époxy ; et a, b, et c satisfont les relations $0 < a < 3$, $0 \le b \le 2$ et $0 < c \le 1$, respectivement, contenant au moins un groupe amino ou un groupe époxy par molécule ;
(b) de 5 à 100 parties en poids d'un agent émulsifiant ; et
(C) de 50 à 500 parties en poids d'eau ;

(B) de 5 à 300 parties en poids d'un silane hydrolysable contenant au moins un groupe fonctionnel par molécule dans laquelle ledit groupe fonctionnel est un groupe contenant un amino si $R^3$ dans le composant (A) est un groupe contenant un époxy, ou un groupe contenant un époxy si $R^3$ est un groupe contenant un amino ; et
(C) une émulsion de silicone comprenant :

(d) de 5 à 200 parties en poids d'un organopolysiloxane exempt d'amino ou d'époxy représenté par la formule générale suivante :

$$R^4{}_d \, R^5{}_e \, SiO \, \tfrac{4-(d+e)}{2}$$

dans laquelle les $R^4$ représentent chacun un groupe hydrocarbure monovalent en $C_{1-20}$ identique ou différent ou un atome d'hydrogène ; les $R^5$ représentent chacun un groupe hydroxyle ou un groupe hydrolysable ; et d et e satisfont les relations $0 < d < 3$, $0 < e < 2$, et $1,9 < d+e < 2,2$, contenant au moins un groupe hydroxyle ou un groupe hydrolysable par molécule ;
(e) de 5 à 100 parties en poids d'un agent émulsifiant sur la base de 100 parties en poids de (d) ; et
(f) de 50 à 300 parties en poids d'eau sur la base de 100 parties en poids de (d).

2.  Composition d'émulsion de silicone filmogène selon la revendication 1, caractérisée en ce que l'organopolysiloxane du composant (a) a une masse moléculaire de 500 à 500 000.

3.  Composition d'émulsion de silicone filmogène selon la revendication 1, caractérisée en ce que l'agent émulsifiant du composant (b) est un agent tensioactif non ionique, un agent tensioactif anionique ou un agent de surface cationique.

4.  Composition d'émulsion de silicone filmogène selon la revendication 1, caractérisée en ce que le silane hydrolysable du composant (B) est un alcoxysilane contenant un époxy ou un alcoxysilane contenant un amino.

5.  Composition d'émulsion de silicone filmogène selon la revendication 1, caractérisée en ce que l'organopolysiloxane du composant (d) a une masse moléculaire de 500 à 500 000.

6.  Composition d'émulsion de silicone filmogène selon la revendication 1, caractérisée en ce que l'agent émulsifiant du composant (e) est un agent tensioactif non ionique, un agent tensioactif anionique ou un agent de surface cationique.